# EUROPÄISCHE PATENTSCHRIFT

(11) **EP 2 718 140 B1**
(45) Veröffentlichungstag und Bekanntmachung des Hinweises auf die Patenterteilung: **08.08.2018**
(21) Anmeldenummer: 12726456.2
(22) Anmeldetag: 11.06.2012
(51) Int. Cl.: B60L 11/18

(54) **VERRIEGELUNGSVORRICHTUNG FÜR ELEKTRISCHE LADEKABEL ODER KLAPPEN**
LOCKING APPARATUS FOR ELECTRIC CHARGING CABLES OR FLAPS
DISPOSITIF DE VERROUILLAGE POUR CÂBLES DE CHARGE ÉLECTRIQUES OU CLAPETS

(30) Priorität: 09.06.2011 DE 102011050998
(43) Veröffentlichungstag der Anmeldung: 16.04.2014
(73) Patentinhaber: Huf Hülsbeck & Fürst GmbH & Co. KG, 42551 Velbert (DE)
(72) Erfinder: GORENZWEIG, Igor, Alexander, 42279 Wuppertal (DE); MÖNIG, Stefan, 58332 Schwelm (DE)
(74) Vertreter: Bals, Rüdiger
(86) Internationale Anmeldenummer: PCT/EP2012/061042
(87) Internationale Veröffentlichungsnummer: WO 2012/168488

(56) Entgegenhaltungen:
- DE-A1-102009 030 092
- US-A- 5 385 480
- US-B1- 7 878 866

## Beschreibung

Die vorliegende Erfindung ist auf eine Verriegelungsvorrichtung gemäß dem Oberbegriff von Anspruch 1 zur Ver- und Entriegelung einer Klappe und/oder eines Ladekabelsteckers von einem Ladekabel, insbesondere für ein Fahrzeug, an einer Ladebuchse gerichtet. Die zuvor genannte Klappe sowie der erwähnte Ladekabelstecker bilden jeweils ein bewegliches Teil, was durch die erfindungsgemäße Verriegelungsvorrichtung, insbesondere am Fahrzeug, sicherbar bzw. verriegelbar ausgestaltet sein sollte. Derartige Verriegelungsvorrichtungen weisen zumindest ein bewegliches Sperrmittel, insbesondere in Form eines Sperrbolzens auf, das zur mechanischen Verriegelung des beweglichen Teils dient, wobei das Sperrmittel zumindest eine Verriegelungsstellung, in welcher das bewegliche Teil durch das Sperrmittel verriegelbar ist, und eine Entriegelungsstellung, in welcher das bewegliche Teil durch das Sperrmittel freigebbar ist, vorhanden ist. Des Weiteren ist ein elektromechanischer Antrieb vorgesehen, der das Sperrmittel antreibt, wodurch ein Wechsel zwischen der Verriegelungsstellung und der Entriegelungsstellung erzeugbar ist. In der Regel ist das erwähnte Sperrmittel und der Antrieb in einem Gehäuse für die Verriegelungsvorrichtung angeordnet.

Derartige Verriegelungsvorrichtungen mit einem Ladekabelstecker werden im Bereich von Fahrzeugen, insbesondere für Elektrofahrzeuge eingesetzt, um beim Aufladen der elektrischen Energiespeicher der Fahrzeuge eine sichere und geschützte Verbindung zwischen der Energiequelle und dem Fahrzeug herzustellen, indem das Ladekabel mit dem Ladekabelstecker am Fahrzeug gesichert ist. Auch können derartige Verriegelungsvorrichtungen zum Verriegeln von einer Klappe, insbesondere hinter der die Ladekabelbuchse oder ein Tankstutzen oderdergleichen angeordnet ist, dienen. Hierzu ist zumindest am Fahrzeug eine entsprechende Ladekabelbuchse vorgesehen, um dann das Fahrzeug mit einer externen Ladestation als Energiequelle verbinden zu können. Dabei möchte man verhindern, dass einerseits das Ladekabel gestohlen werden kann oder aber der Ladevorgang von Dritten unterbrochen wird, die dann die Energie aus dem Ladekabel zweckentfremden und gegebenenfalls ein fremdes Fahrzeug aufladen. Zu diesem Zweck sind derartige Verriegelungsvorrichtungen zwischen dem Ladekabelstecker und der entsprechenden Ladebuchse am Fahrzeug, die insbesondere über die Fahrzeugelektronik angesteuert werden, oder zwischen dem Ladekabelstecker und der entsprechenden Ladebuchse an der Ladestation vorgesehen. Hierbei kann man sich insbesondere das Sicherheitssystem des Fahrzeugs, wie der elektrischen Zentralverriegelung oder der Wegfahrsperre, zu nutzen machen. Allerdings dauert der Ladevorgang des elektrischen Energiespeichers bei Elektrofahrzeugen deutlich länger als ein vergleichbarer Tankvorgang bei erdölbetriebenen Fahrzeugen. Aus diesem Grund ist es kaum möglich, für einen Benutzer des Fahrzeugs, das gesamte Ladeverfahren persönlich zu kontrollieren. Folglich wird dieser Ladevorgang durch das elektrische Ladekabel auch unbeabsichtigt stattfinden.

Aus der Druckschrift DE 10 2009 030 092 A1 ist ein Ladekabelstecker für Elektrofahrzeuge bekannt, der über eine derartige Verriegelungsvorrichtung mit entsprechenden Verriegelungsmitteln mechanisch verriegelt wird. Dabei fahren automatisch zwei Sperrmittel in die dafür vorgesehenen Öffnungen im Ladekabelstecker ein, wenn dieser mit der Ladebuchse des Fahrzeugs verbunden ist. Auf diese Art und Weise ist der Ladekabelstecker am Fahrzeug gegen unbefugtes Entfernen mechanisch gesichert.

Nachteilig an diesem Stand der Technik ist jedoch, dass die elektrische Verbindung zwischen der Ladestation und dem Fahrzeug während des Ladeverfahrens nicht permanent durch den Benutzer gesichert ist. So kann z. B. durch einen Unfall eine ungewollte Gewalteinwirkung auf das Ladekabel stattfinden, indem z. B. ein Fahrradfahrer, ein Fußgänger oder dergleichen das Ladekabel übersieht und dieses in seiner Bewegung mitreißt. Hierdurch kann der Ladekabelstecker aus seiner Ladekabelbuchse im Fahrzeug oder an den Ladestationen herausgerissen werden. Üblicherweise werden hierbei Teile des Ladekabels oder der jeweiligen Verriegelungsvorrichtung zerstört, so dass die Gefahr von einem elektrischen Schlag oder einem elektrischen Kurzschluss gegeben ist. Außerdem kann sich das Ladekabel aus dem Ladekabelstecker herausreißen, da diese Verbindung in der Regel nicht für mechanische Belastungen ausgelegt ist. Auch hierbei kann es zu den zuvor beschriebenen Problemen kommen. Hierbei ist zu berücksichtigen, dass das Ladeverfahren eben auch an öffentlichen und ggf. schlecht beleuchteten Stellen stattfindet, die für Dritte zugänglich sind. Außerdem soll auch vermieden werden, dass unbefugte Dritte durch ein gewaltsames Entfernen des Ladekabelsteckers aus der Ladekabelbuchse tödliche Gefahren erleiden.

Aufgabe der vorliegenden Erfindung ist es, eine Verriegelungsvorrichtung sowie ein Verfahren zur Ver- und Entriegelung eines beweglichen Teils, wie eine Klappe und/oder eines Ladekabelsteckers an einer Ladekabelbuchse zu schaffen, bei der bzw. bei dem die Nachteile aus dem Stand der Technik behoben werden. Insbesondere ist es eine weitere Aufgabe der Erfindung, dass eine Trennung des Ladekabelsteckers bei einer groben Gewalteinwirkung ohne die Gefahr eines elektrischen Schlages oder eines elektrischen Kurzschlusses möglich ist bzw. ein Öffnen der Klappe zerstörungsfrei ermöglicht wird.

Die Aufgabe der vorliegenden Erfindung wird durch eine Verriegelungsvorrichtung gemäß dem Anspruch 1, insbesondere aus den Merkmalen des kennzeichnenden Teils gelöst. Ebenfalls wird die Aufgabe der vorliegenden Erfindung wird durch ein Verfahren zur Ver- und Entriegelung einer Klappe und/oder eines Ladekabelsteckers an einer Ladekabelbuchse gemäß dem Anspruch 9, insbesondere aus den Merkmalen des kennzeichnenden Teils gelöst. Weitere vorteilhafte Ausgestaltungen der Erfindung sind in den Unteransprüchen sowie in der nachfolgenden Beschreibung und den Figuren dargestellt.

Erfindungsgemäß ist es bei der Verriegelungsvorrichtung mit den Merkmalen aus dem Oberbegriff von Anspruch 1 vorgesehen, dass zumindest ein Überlastmittel zwischen der Klappe und/oder dem Ladekabelstecker sowie der Ladekabelbuchse vorgesehen ist, wodurch der Ladekabelstecker von der Ladekabelbuchse in der Verriegelungsstellung (II) bei Gewalteinwirkung trennbar ist bzw. die Klappe in ihre Öffnungsposition überführbar ist.

Es sei an dieser Stelle erwähnt, dass auch zwei oder mehrere Sperrmittel bei der Verriegelungsvorrichtung vorhanden sein können. Im Sinne dieser Erfindung kann die Verriegelungsvorrichtung sowohl am Fahrzeug als auch an der Ladestation vorgesehen sein, wobei die Klappe und/oder der Ladekabelstecker das bewegliche Bauteil darstellen, welches mittels des Sperrmittels sicherbar bzw. verriegelbar ist. Im Zusammenhang mit dem Ver- und Entriegeln des bewegliche Bauteils sollen die beiden Begriffe: Klappe und Ladekabelstecker als Synonym verstanden werden, auch wenn die beiden beweglichen Teile (die Klappe und der Ladekabelstecker) sicherlich unterschiedliche, technische Funktionen innehaben.

Im nachfolgenden Text wird immer davon ausgegangen, dass sich der Ladekabelstecker aus der Ladekabelbuchse ausschließlich durch eine Gewalteinwirkung trennen soll, wobei zuvor jedoch der Ladekabelstecker mechanisch mit der Ladekabelbuchse, insbesondere über das Sperrmittel verbunden ist. Die erwähnte Gewalteinwirkung wirkt von außen auf das Ladekabel, insbesondere auf einen der entsprechenden Ladekabelstecker. Das Ladekabel selbst kann insbesondere mit zwei Ladekabelsteckern versehen sein, die mit entsprechenden Ladekabelbuchsen in der Ladestation und dem Fahrzeug mechanisch sowie elektrisch zusammenwirken. Auch ist es denkbar, dass das Ladekabel nur an einer Stelle einen Ladekabelstecker aufweist, der zur Verbindung des Ladekabels mit dem Fahrzeug oder der Ladestation dient. So kann die erfindungsgemäße Verriegelungsvorrichtung am Fahrzeug und/oder an der Ladestation vorgesehen sein. Die äußere Gewalteinwirkung kann durch einen Unfall oder durch einen bewussten Diebstahl, wie zuvor beschrieben, hervorgerufen werden. Auch die Klappe, insbesondere für eine Ladekabelbuchse, kann bei äußere Gewalteinwirkung durch das vorgesehene Überlastmittel ohne Zerstörung, d.h. zerstörungsfrei, aus ihrer Schließposition in ihre Öffnungsposition überführt werden. Allerdings ist es ebenfalls denkbar, dass die erfindungsgemäße Vorrichtung ausschließlich den Ladekabelstecker bei einer Gewalteinwirkung freigibt, nicht jedoch auch die ebenfalls vorhandene Klappe, so dass sich diese Klappe nur durch eine bewusste, mechanische Zerstörung aus ihrer Schließposition in die Öffnungsposition überführen lässt.

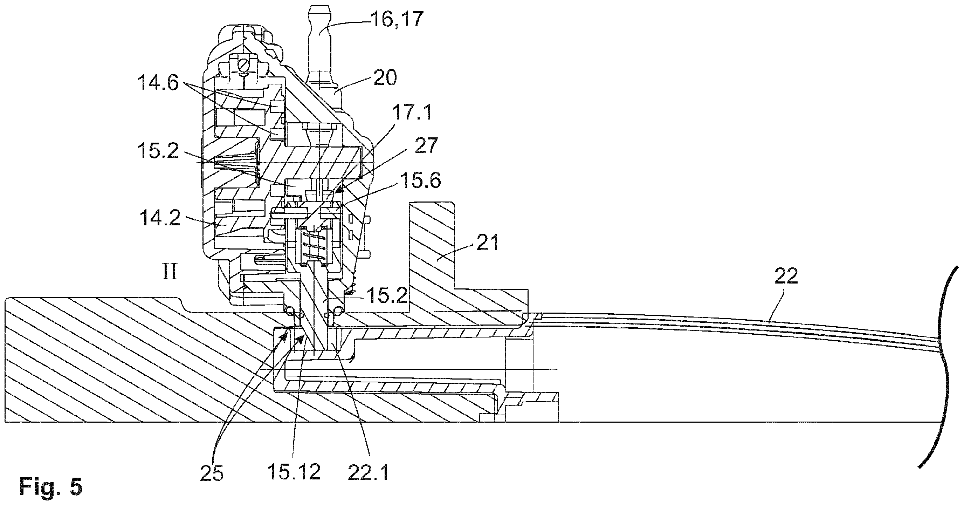

Erfindungsgemäß kann es vorgesehen sein, dass das Überlastmittel das Sperrmittel, insbesondere rein mechanisch und/oder elektromechanisch aus seiner Verriegelungsstellung in seine Entriegelungsstellung überführt, wodurch der Ladekabelstecker aus der Ladekabelbuchse entfernbar ist. Sofern das Überlastmittel das Sperrmittel rein mechanisch aus seiner Verriegelungsstellung in seine Entriegelungsstellung überführt, kann hierzu an der Spitze des Sperrmittels eine Schräge, Rundung oder Fase vorgesehen sein, die mit einer Kontaktfläche am Ladekabelstecker mechanisch zusammenwirkt, um das Sperrmittel aus seiner Verriegelungsstellung in die Entriegelungsstellung zu drücken. Dabei dient die erwähnte Schräge bzw. Fase an der Spitze des Sperrmittels sowie die Kontaktfläche am Ladekabelstecker als Überlastmittel (s. auch Fig. 5). Da ein Sperrteil des Sperrmittels federbelastest und somit nachgebbar zum Führungsteil des Sperrmittels ausgestaltet ist, kann das Sperrteil durch die Gewalteinwirkung zumindest teilweise in das Gehäuses der Verriegelungsvorrichtung hineingedrückt werden.

Ebenfalls ist es im Rahmen der Erfindung denkbar, dass das rein mechanische Überlastmittel in Form einer Sollbruchstelle, insbesondere am Sperrmittel, ausgestaltet ist, wodurch sichergestellt wird, dass bei einer groben Gewalteinwirkung auf die Verbindungsklappe und Verriegelungsvorrichtung bzw. Ladekabelstecker und Verriegelungsvorrichtung in der Verriegelungsstellung des Sperrmittels eine mechanische Trennung trotzdem möglich ist. Selbstverständlich löst ein derartiges Überlastmittel in Form einer Sollbruchstelle nur einmal aus und kann nicht wieder verwendet werden. Sofern das Sperrmittel mit einem Überlastmittel in Form einer Sollbruchstelle ausgestaltet ist, muss das Sperrmittel nach dem einmaligen Auslösen bei einer Gewalteinwirkung ersetzt bzw. ausgetauscht werden. Das Überlastmittel in Form einer Sollbruchstelle kann als Verjüngung, Einschnürung oder Bohrung im Sperrmittel ausgestaltet sein. Zweckmäßigerweise ist die Sollbruchstelle in der Verriegelungsstellung des Sperrmittels gerade im Bereich des äußeren Randes des Gehäuses der Verriegelungsvorrichtung angeordnet, so dass ein mechanischer Bruch zwischen der Verriegelungsvorrichtung, insbesondere dem Sperrteil, und dem Ladekabelstecker bzw. der Klappe sicher möglich ist.

Ebenfalls ist es denkbar, dass das Überlastmittel ein Überlastsignal erzeugt, wodurch das Sperrmittel mithilfe seines elektromechanischen Antriebs aus seiner Verriegelungsstellung in seine Entriegelungsstellung überführt wird. Somit wird der normale Entriegelungsvorgang eingeleitet, der üblicherweise auch durchgeführt wird, wenn die Verriegelungsvorrichtung im Normalbetrieb genutzt wird. Allerdings wird hier das Überlastmittel dazu benutzt, ein entsprechendes Auslöse- bzw. Überlastsignal zu erzeugen. Zu diesem Zweck kann das Überlastmittel zumindest einen Sensor aufweisen, der die Gewalteinwirkung messtechnisch erfasst und ein entsprechendes Überlastsignal erzeugt. Dieser Sensor kann insbesondere Kräfte messen, die durch die Gewalteinwirkung in der Verriegelungsvorrichtung entstehen. Selbstverständlich können auch mehrere Sensoren vorgesehen sein, um die Gewalteinwirkung messtechnisch von anderen Störungen zu unterscheiden.

Ferner ist es denkbar, dass das Überlastmittel bei Gewalteinwirkung den elektromechanischen Antrieb des Sperrmittels, insbesondere durch ein Überlastsignal, ansteuert, wodurch das Sperrmittel mithilfe des elektromechanischen Antriebs aus seiner Verriegelungsstellung in seine Entriegelungsstellung überführbar ist. Hierzu kann insbesondere eine vorbestimmte Auslösekraft genutzt werden, die mit dem Überlastsignal vom Sensor des Überlastmittels verglichen wird und bei einem Überschreiten der Auslösekraft die Ansteuerung des elektromechanischen Antriebs für das Sperrmittel erfolgt. Dabei kann auch berücksichtigt werden, dass z. B. ein sprungartiger Kraftanstieg von dem Sensor des Überlastmittels erfasst wird, der auf einen Unfall für die Gewalteinwirkung hindeutet. Wird hingegen z. B. ein sehr langsamer Kraftanstieg in dem Überlastsignal erfasst, so kann dieses eher auf eine Manipulation durch einen unbefugten Dritten hindeuten, so dass die Auslösekraft in diesem Fall deutlich erhöht sein muss, bevor eine Ansteuerung durch das Überlastmittel an den elektromechanischen Antrieb des Sperrmittels erfolgt. Folglich ist es im Rahmen der Erfindung möglich, die Auslösekraft sowie die Auslösegeschwindigkeit und den Anstieg der Auslösekraft zu differenzieren und erst bei einer gewünschten Vorgabe eine Trennung des Ladekabelsteckers aus der Ladekabelbuchse vorzusehen bzw. durch die Ansteuerung des elektromechanischen Antriebs für das Sperrmittel vorzunehmen. Somit ist die Auslösekraft bei der Gewalteinwirkung für die erfindungsgemäße Verriegelungsvorrichtung für bzw. durch das Überlastmittel exakt einstellbar. Außerdem ist es denkbar, dass durch das Überlastsignal, welches bei der Gewalteinwirkung vorliegt, ein elektrischer Ladestromfluss, insbesondere im Ladekabel und/oder der Verriegelungsvorrichtung, unterbrechbar ist. Hierdurch kann die Verletzungsgefahr für einen Dritten deutlich reduziert werden. Zusätzlich kann auch ein Alarmsignal für die Unterbrechung erzeugt werden, so dass die Gewalteinwirkung auf den Ladekabelstecker in jedem Fall nachvollziehbar ist, auch wenn der Ladekabelstecker vielleicht immer noch in der Ladekabelbuchse verweilt oder nachträglich wieder hineingesteckt worden ist. Durch dieses Alarmsignal kann auch der elektrische Ladestromfluss unterbrochen werden. Diese Unterbrechung kann einerseits fahrzeugseitig stattfinden und andererseits auch an der Ladestation. Auch in diesem Fall kann die vorbestimmte Auslösekraft als auslösendes Ereignis genutzt werden, wenn das Überlastsignal den Wert der Auslösekraft überschreitet.

Der Antrieb für das Sperrmittel kann direkt oder indirekt über ein Getriebe das Sperrmittel antreiben. Der Antrieb selbst kann als ein elektrischer Motor mit oder ohne Getriebe ausgestaltet sein, sowie als ein Stellmotor oder auch einfach als elektrischer Magnet, der das Sperrmittel hin und her zwischen der Verriegelungs-und Entriegelungsstellung bewegt. Zweckmäßigerweise hält das Sperrmittel zumindest die Verriegelungsstellung, bevorzugt auch die Entriegelungsstellung, ohne Zuführung von elektrischer Energie, insbesondere bei dem Antrieb in Form eines elektrischen Magnets. Sofern der Antrieb auch mit einem Getriebe versehen ist, kann das Getriebe selbsthemmend ausgestaltet sein, wie z.B. bei einem Schneckengetriebe. Somit kann erreicht werden, dass das gesamte Sperrmittel ausschließlich durch den Antrieb und nicht von außen bewegbar ist. Außerdem ist es möglich, dass die erfindungsgemäße Verriegelungsvorrichtung nur dann Energie verbraucht, wenn das Sperrmittel zwischen seiner Ver- und Entriegelungsstellung hin und her bewegt wird.

Ferner kann das Sperrmittel der erfindungsgemäßen Verriegelungsvorrichtung zweiteilig aufgebaut sein und hierfür zumindest ein Führungsteil und ein insbesondere federbelastetes Sperrteil aufweisen. Das Sperrteil ist längsverschieblich und somit relativ beweglich zum Führungsteil angeordnet. Zwischen diesen beiden Teilen ist ein Federelement vorgesehen, wodurch das Sperrteil vom Führungsteil weggedrückt wird. Im Sperrteil kann eine Aufnahmeführung bzw. -öffnung für das Führungsteil vorgesehen sein, in die das Führungsteil eintauchen kann. In dieser Aufnahmeführung kann auch das bereits beschriebene Federelement angeordnet sein, wobei es formschlüssig an Vorsprüngen vom Sperrteil und Führungsteil haltbar ist bzw. gehalten ist. Das Führungsteil und das Sperrteil des Sperrmittels können über zumindest ein Verbindungsteil, insbesondere in Form eines Verbindungsstiftes, zusammengehalten. Auch ist es denkbar, dass das Sperrmittel einteilig und starr ausgestaltet ist.

Erfindungsgemäß ist es denkbar, dass das Überlastmittel rein mechanisch oder auch elektromechanisch in der Verriegelungsstellung zur zerstörungsfreien Trennung des Ladekabelsteckers von der Ladekabelbuchse dient. Hierbei geht es darum, dass insbesondere die Isolation des Ladekabels und des Ladekabelsteckers sowie der Ladekabelbuchse vollständig und funktionsfähig bleibt.

Erfindungsgemäß kann das Überlastmittel zumindest einen Sensor aufweisen, der als Dehnungsmeßstreifen (DMS), piezoelektrischer, induktiver, magnetoelastischer, hydraulischer oder mechanischer Kraftaufnehmer oder als optischer Sensor ausgestaltet sein kann. Auch ist es denkbar, dass der Sensor als Abstandssensor, Widerstandssensor, Kraftsensor oder als Kontaktsensor ausgebildet sein kann. Auch ist es denkbar, dass mehrere Sensoren unterschiedlicher Bauart und Funktionsweise für das Überlastmittel zum Einsatz kommen. Zusätzlich können auch Vergleichssensoren oder Kontrollsensoren vorhanden sein, um möglichst nur im Fall der Gewalteinwirkung eine Auslösung des Überlastmittels zu erreichen. Zumindest ein Sensor des Überlastmittels kann zwischen dem Sperrmittel und einem Führungsabschnitt für das Sperrmittel angeordnet sein, wobei der Führungsabschnitt zumindest einen Teil eines Gehäuses der Verriegelungsvorrichtung bilden kann. Durch die Gewalteinwirkung entsteht eine Zugkraft im Ladekabel und somit auch im Ladekabelstecker, der dazu führt, dass auf das Sperrmittel Scherkräfte wirken. Diese entstehen dadurch, dass an der Spitze des Sperrmittels, insbesondere des Sperrteils Zugkräfte durch den Ladekabelstecker wirken, die sich auf der gegenüberliegenden Seite als Druckkräfte darstellen, indem sich das Sperrmittel an dem Führungsabschnitt abstützt, um das erforderliche Gegenlager zu bilden. Dabei kann zumindest ein Sensor des Überlastmittels direkt am Sperrmittel bzw. am Führungsabschnitt für das Sperrmittel angeordnet sein.

Ebenfalls ist es denkbar, dass zumindest zwei Sensoren des Überlastmittels zwischen dem Sperrmittel und dem Führungsabschnitt für das Sperrmittel angeordnet sind. Hierbei können die beiden Sensoren eine unterschiedliche, insbesondere senkrechte, Messrichtung zueinander aufweisen, wenn sie an einer Seite angeordnet sind. Ebenfalls ist es denkbar, dass die beiden Sensoren auf gegenüberliegenden Seiten vom Sperrmittel angeordnet sind, um somit die Verformung bzw. die auf das Sperrmittel wirkenden Kräfte einerseits als Druckkräfte und andererseits als Zugkräfte messtechnisch erfassen zu können. Auch in diesem Beispiel können zwei Sensoren je Seite des Sperrmittels angeordnet sein, wodurch eine besonders exakte Kräftemessung erfolgen kann. Z. B. kann hier eine Wheatstonesche Brücke gebildet werden, um möglichst viele äußere Umwelteinflüsse messtechnisch kompensieren zu können.

Die zuvor erwähnten Sensoren des Überlastmittels können auch im Sperrmittel oder dem bereits erwähnten Führungsabschnitt integriert sein, d. h. sie können auch unter einer entsprechenden Oberfläche angeordnet sein. Wie bereits erwähnt, kann mit den Sensoren nicht nur eine absolute Kraft auf das Sperrmittel erfasst werden, sondern auch den Anstieg und die Geschwindigkeit der entsprechend wirkenden Kraft.

Auch ist es denkbar, dass zumindest ein Sensor des Überlastmittels zwischen dem Ladekabelstecker und der Ladekabelbuchse angeordnet ist. Hierbei kann der entsprechende Sensor insbesondere als Abstandssensor, Widerstandssensor, Kraftsensor oder als Kontaktsensor ausgestaltet sein. So kann das mechanische Spiel zwischen dem Ladekabelstecker und der Ladekabelbuchse im Verriegelungszustand des Sperrmittels, wodurch auch die mechanische Verbindung zwischen dem Ladekabelstecker und der Ladekabelbuchse verstanden wird, messtechnisch durch zumindest einen Sensor des Überlastmittels erfasst werden. Sobald dieses Spiel überschritten wird, kann die Entriegelung des Sperrmittels durch den elektromechanischen Antrieb angesteuert werden.

Erfindungsgemäß kann ebenfalls zumindest ein weiterer Sensor die Stellung des Sperrmittels und/oder zumindest durch einen weiteren Sensor die Position des Ladekabelsteckers in der Ladekabelbuchse messtechnisch erfassen. Ebenfalls kann noch ein weiterer Sensor vorgesehen sein, der auch die Position des elektromechanischen Antriebs messtechnisch überwacht. Anhand dieser Informationen lässt sich exakt der Zustand der Verriegelungsvorrichtung bestimmen, und zwar für die unterschiedlichsten Fälle, so auch bei einer Gewalteinwirkung. Diese Information von den weiteren Sensoren kann ebenfalls genutzt werden, um einen Abgleich oder einen Vergleich mit dem Überlastsignal vom Überlastmittel vorzunehmen.

Des Weiteren ist die vorliegende Erfindung auch auf ein Verfahren, insbesondere nach Anspruch 9, zur Betätigung einer Verriegelungsvorrichtung zur Ver- und Entriegelung eines Ladekabelsteckers für ein Fahrzeug gerichtet, wobei ein Sperrmittel den Ladekabelstecker in bzw. an der Ladekabelbuchse verriegeln und entriegeln kann. Das erfindungsgemäße an dem Verfahren ist daran zu sehen, dass bei einer Gewalteinwirkung auf die mechanische Verbindung zwischen dem Ladekabelstecker und der Ladekabelbuchse in der Verriegelungsstellung (II), die mechanische Verbindung, insbesondere durch ein Überlastmittel gelöst wird, wodurch der Ladekabelstecker von der Ladekabelbuchse getrennt wird. Hierbei kann die erfindungsgemäße Verriegelungsvorrichtung zur Anwendung des Verfahrens vorgesehen sein.

Des Weiteren ist es für das erfindungsgemäßen Verfahren denkbar, dass im Fall der Gewalteinwirkung eine rein mechanische Betätigung des Sperrmittels durch das Überlastmittel stattfindet, wodurch das Sperrmittel aus seiner Verriegelungsstellung in seine Entriegelungsstellung überführt wird.

Ebenfalls kann es im Rahmen des erfindungsgemäßen Verfahrens vorgesehen sein, dass das Überlastmittel, insbesondere durch einen Sensor, messtechnisch die Gewalteinwirkung erfasst und den elektromechanischen Antrieb des Sperrmittels derart ansteuert, dass das Sperrmittel aus seiner Verriegelungsstellung in seine Entriegelungsstellung überführt wird.

Die Erfindung ist in diversen Ausgestaltungen durch die abhängigen Unteransprüche und die nachfolgende Beschreibung erläutert. Dabei gelten Merkmale und Details, die im Zusammenhang mit der erfindungsgemäßen Vorrichtung offenbart werden, auch im Zusammenhang mit dem erfindungsgemäßen Verfahren und umgekehrt, so dass bezüglich der Offenbarung zu den einzelnen Erfindungsaspekten stets wechselseitig Bezug genommen wird.

Weitere Maßnahmen und Vorteile der Erfindung ergeben sich aus den Ansprüchen, der nachfolgenden Beschreibung und den Zeichnungen. In den Zeichnungen ist die Erfindung in unterschiedlichen Ausführungsbeispielen dargestellt. Dabei können in den Ansprüchen und in der Beschreibung erwähnte Merkmale jeweils einzeln für sich oder in beliebiger Kombination erfindungswesentlich sein. Es zeigen:
- Figur 1: eine teilweise Schnittansicht durch eine erfindungsgemäße Verriegelungs-vorrichtung mit eingestecktem Ladekabelstecker in der Verriegelungsstellung (II),
- Figur 2: ein Schnitt B-B durch die Verriegelungsvorrichtung aus Figur 1,
- Figur 3: eine vergleichbare Vergrößerung des Schnitts B-B aus Figur 2 durch ein zweiteiliges Sperrmittel in einer Entriegelungsstellung,
- Figur 4a - c: Varianten zur Anordnung von einem oder mehreren Sensoren des Überlastmittels im Bereich des Sperrmittels,
- Figur 5: eine Schnittdarstellung durch eine weitere Verriegelungsvorrichtung mit einem rein mechanisch wirkenden Überlastmittel,
- Figur 6: eine Schnittdarstellung durch eine weitere Verriegelungsvorrichtung,
- Figur 7: eine Schnittdarstellung durch eine weitere Verriegelungsvorrichtung mit einem elektrisch wirkenden Überlastmittel,
- Figur 8: eine schematische Schnittdarstellung durch eine erfindungsgemäße Verriegelungsvorrichtung an einem Fahrzeug oder eine Ladestation, die eine Klappe, insbesondere vor einer Ladekabelbuchse, in ihrer Schließposition hält,
- Figur 9: vergleichbare Schnittdarstellung durch die Verriegelungsvorrichtung aus Figur 8, wobei die Klappe in einer Öffnungsposition angeordnet ist und ein Ladekabelstecker auf die Ladekabelbuchse aufsteckbar ist,
- Figur 10: vergleichbare Schnittdarstellung aus den Figuren 8 und 9 mit der Verriegelungsvorrichtung aus diesen Figuren, wobei der Ladekabelstecker auf die Ladebuchse aufgesteckt ist und durch die Verriegelungsvorrichtung verriegelt ist und
- Figur 11: schematische Ansicht auf ein Sperrmittel einer Verriegelungsvorrichtung mit einem Überlastmittel in Form einer Sollbruchstelle.

In den vorhandenen Figuren ist die erfindungsgemäße Verriegelungsvorrichtung 10 in verschiedenen Ansichten und Varianten dargestellt. Gleiche technische Merkmale in den Figuren weisen das identische Bezugszeichen mit der selben technischen Funktion auf.

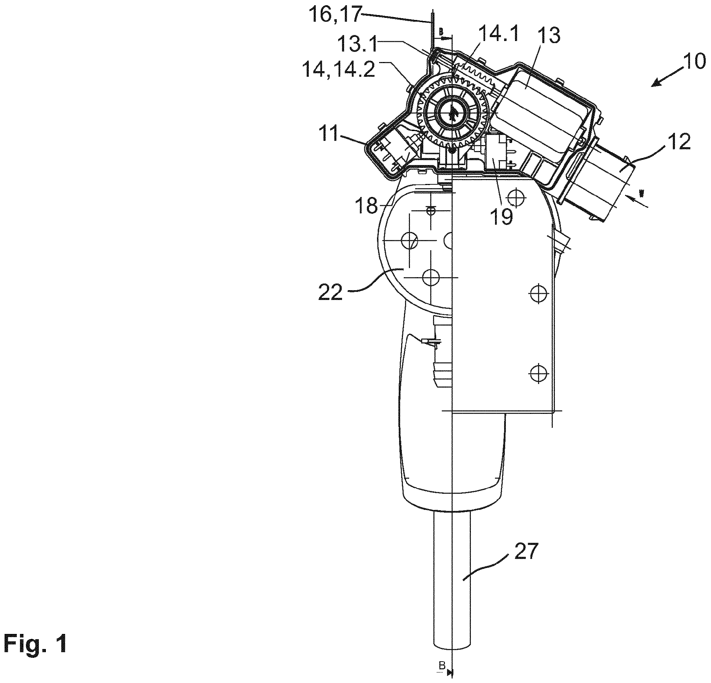

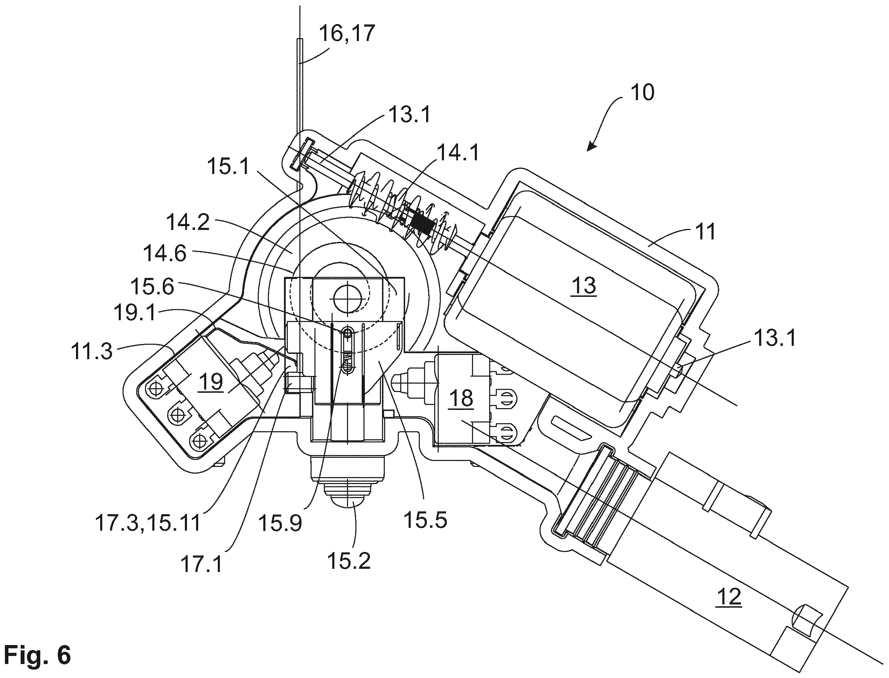

In den Figuren 1 bis 7 ist die erfindungsgemäße Verriegelungsvorrichtung 10 in verschiedenen Ansichten dargestellt, wobei ihr Gehäuse 11 zur besseren Übersicht teilweise aufgeschnitten worden ist, um das Innere, insbesondere die Bauteile 13 bis 19 darstellen zu können. Das Gehäuse 11 ist selbst zweiteilig aufgebaut und weist eine untere Gehäusehälfte 11.1 und obere Gehäusehälfte auf. Zur Abdichtung der aufeinanderliegenden Gehäusehälften ist ein Nut-Federnsystem vorgesehen, wodurch eine Labyrinthdichtung erzeugt wird. Die beiden Gehäusehälften 11.1 werden über Rastverbindungen 11.4 zusammengehalten, die seitlich an der Trennnaht zwischen den beiden Gehäusehälften 11.1 angeordnet sind. Diese Rastverbindungen 11.4 bestehen aus Clipsverbindungen, die durch eine federnde Lasche aufgebaut sind, die mit keilförmigen Vorsprüngen mechanisch zusammenwirken, um insbesondere einen Formschluss zu erzeugen. Ferner ist an dem Gehäuse 11 eine Anschlußbuchse 12 mit elektrischen Kontakten (s. Figur 1,6 u. 7) angeordnet, um eine elektrische Energieversorgung und ggf. auch eine Ansteuerung der Verriegelungsvorrichtung 10 zu ermöglichen. Die Steckerbuchse 12 ist in den vorliegenden Ausführungsbeispielen der erfindungsgemäßen Verriegelungsvorrichtung 10 einstückig und auch materialeinheitlich mit dem Gehäuse 11 ausgestaltet. Durch das aufgebrochene Gehäuse 11 ist ein Sperrmittel 15 erkennbar, welches über einen Antrieb 13 bewegbar ist. Zwischen dem Antrieb 13 und dem Sperrmittel 15 ist ein Getriebe 14, in Form eines Schneckengetriebes angeordnet, wobei das Schneckenrad 14.2 gut sichtbar ist, an dem das Sperrmittel 15 längsverschieblich aufgenommen ist. Ebenfalls ist an dem Schneckenrad 14.2 ein Steuermittel 14.3 für einen zweiten Sensor 18 angeordnet, der in Figur 6 besser erkennbar ist. In den Figuren 1, 5 bis 7 ragt eine Notentriegelung 16, insbesondere in Form eines Zugmittel 17, aus der oberen Gehäusehälfte heraus, die mit einer Dichtung 20 abgedichtet ist, um das Innere des Gehäuses 11 vor Umwelteinflüssen, wie Staub, Feuchtigkeit und dergleichen, zu schützen.

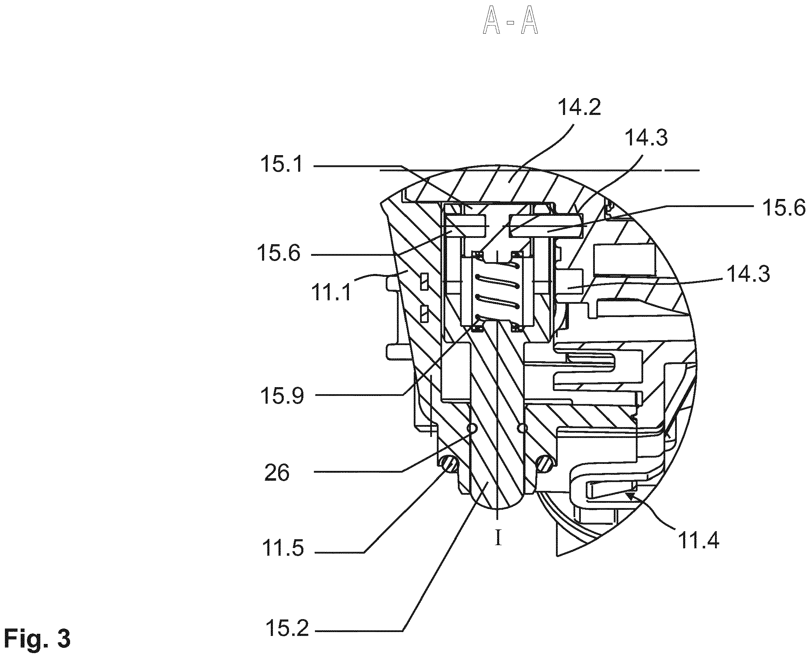

Die Figur 3 zeigt einen vergrößerten Längsschnitt A-A durch die Verriegelungsvorrichtung 10 aus Figur 1. Dabei ist das Sperrmittel 15 mehrteilig aufgebaut und verfügt über ein Führungsteil 15.1, welches von dem Schneckenrad 14.2 angetrieben ist. Auch ist es denkbar, dass das Sperrmittel 15 direkt durch den elektromechanischen Antrieb 13 angetrieben wird. Im vorliegenden Fall ist jedoch das Sperrmittel 15 in einer Führungsbahn 14.3 im Schneckenrad 14.2 angeordnet und wirkt mechanisch über einen Verbindungsteil 15.6 mit der Führungsbahn 14.3 im Schneckenrad 14.2 zusammen. Eine Drehung des Schneckenrads 14.2 verursacht somit ein Längsverschiebung des Sperrmittels 15, insbesondere des Führungsteils 15.1, so dass das Sperrmittel 15 zwischen seiner Entriegelungsstellung I und Verriegelungsstellung II hin und her verfahren werden kann. Durch die Enden der Führungsbahn 14.3 im Schneckenrad 14.2 ist auch der obere und untere Anschlag des Sperrmittels 15 definiert.

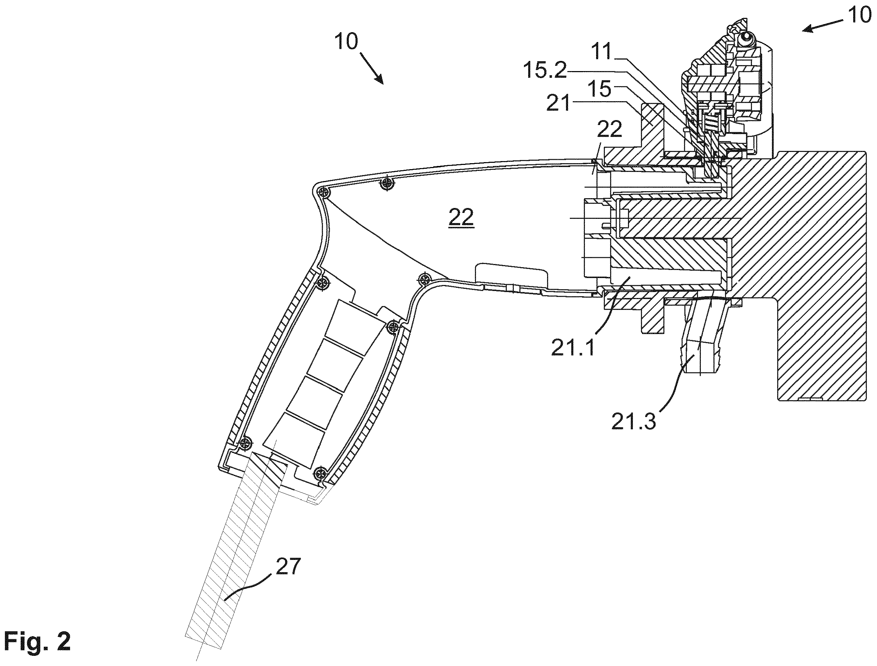

Wie weiter gut aus Figur 2 ersichtlich ist, ist das Sperrteil 15.2 längsverschieblich und somit relativ beweglich zum Führungsteil 15.1 angeordnet. Zwischen diesen beiden Teilen ist ein Federelement 15.9 vorgesehen, wodurch das Sperrteil 15.2 vom Führungsteil 15.1 weggedrückt wird. Im Sperrteil 15.2 ist eine Aufnahmeführung bzw. -Öffnung für das Führungsteil 15.1 vorgesehen, in die das Führungsteil 15.1 eintauchen kann. In dieser Aufnahmeführung ist auch das bereits beschriebene Federelement 15.9 angeordnet, wobei es formschlüssig an Vorsprüngen vom Sperrteil 15.2 und Führungsteil 15.1 gehalten ist. Wie aus der Figur 3 deutlich wird, werden die beiden Teile 15.1, 15.2 des Sperrmittels 15 über zumindest ein Verbindungsteil 15.6, insbesondere in Form eines Verbindungsstiftes, zusammengehalten. Das Zugmittel 17 für die Notentriegelung 16, die ausschließlich zugänglich vom Fahrzeuginnenraum ist, weist ein Kompensationselement 17.3 auf, um eine Bewegung des Sperrmittels 15 zwischen der Ver- und Entriegelungsstellung kompensieren zu können. Somit ist es nicht erforderlich, dass bei einem Ausfahren des Sperrmittels 15 in die Verriegelungspositions II das Zugmittel 17 komplett bewegt werden muss. Das Kompensationselement 17.3 sorgt vielmehr dafür, dass eine Bewegung des Zugmittels 17 außerhalb des Gehäuses 11 bei einem Wechsel des Sperrmittels 15 von der Entriegelungsstellung I in die Verriegelungsstellung II nicht notwendig ist. Folglich können sowohl das erste Ende 17.1 als auch das zweite Ende des Zugmittels 17 fest und unnachgiebig eingespannt oder angeordnet sein. In den Figuren kann ein flexibles Zugmittel zum Einsatz kommen, welches aus einem Seil, Drahtseil, Bowdenzug oder dergleichen bestehen kann.

Um sicherzustellen, dass eine ordnungsgemäße Verriegelung des beweglichen Teils 22, insbesondere des Ladekabelsteckers 22, in der Verriegelungsstellung II stattgefunden hat, ist ein Steuermittel 15.5 für den ersten Sensor 18 an dem Sperrteil 15.2 angeordnet. Dieses Steuermittel 15.5 besteht aus einer Steuerkontur, die nockenartig am äußeren Umfang des Sperrteils 15.2 herausragt und mit dem ersten Signalgeber 18 zusammenwirkt. In der Figur 6 ist das Sperrmittel 15 in seiner Entriegelungsstellung I dargestellt. Erst wenn das Sperrteil 15.2 in eine Ausnehmung 22.1 im beweglichen Ladekabelstecker 22 einfahren kann, erfasst der erste Signalgeber 18 durch die Steuerkurve 15.5 eine örtliche Verschiebung des Sperrmittels 15, insbesondere des Sperrteils 15.2. Dieses Messsignal kann vom ersten Signalgeber 18 an eine Steuerelektronik der Verriegelungsvorrichtung 10 und/oder die Fahrzeugelektronik weitergegeben werden.

In der Figur 6 ist ein Schnitt durch eine erfindungsgemäße Verriegelungsvorrichtung 10 gezeigt. Dabei ist deutlich erkennbar, dass ein zweiter Signalgeber 19 an einer Innenseite einer Gehäusehälfte 11.1 durch Halte-, Führungs- und/oder Aufnahmeelemente 11.3 angeordnet ist. Des Weiteren ist auch gut das mechanische Zusammenwirken vom Getriebe 14 mit dem Sperrmittel 15 erkennbar. Außerdem lässt sich die Anordnung und Befestigung des Zugmittels 17 im Sperrmittel 15 gut erkennen. Dabei weist das erste Ende 17.1 des Zugmittels 17 eine Verdickung auf, die in der Ausnehmung 15.3 eingebettet ist und dort formschlüssig gehalten wird. Das weitere Zugmittel 17 wird dann durch den Durchbruch 15.4 geführt und gelangt am Führungsteil 15.1 parallel entlang zur Dichtung 20, um dann aus dem Gehäuse 11 der Verriegelungsvorrichtung 10 austreten zu können. Das zweite Ende des Zugmittels 17 endet an dem Betätigungselement, welches in der Figur 6 nicht dargestellt ist.

Im Notfall findet eine Entriegelung des Ladekabelsteckers 22, dadurch statt, dass die Notentriegelung 16 betätigt wird, was insbesondere durch einen Zug an dem Zugmittel 17 erfolgt. Wie in den Figur 5 bis 7 gut erkennbar ist, wird somit das Sperrteil 15.2 durch das angreifende erste Ende des Zugmittels 17 gegen die Kraft des Federelementes 15.9 zum Führungsteil 15.1 verschoben und gibt somit die Ausnehmung 22.1 vom beweglichen Teil 22 frei, wodurch das bewegliche Teil 22 wieder bewegbar wird. Ein Zug am Zugmittel 17 bewirkt keine Verschiebung oder Drehung des Antriebs 13 oder des Getriebes 14. Vielmehr taucht das Führungsteil 15.1 in die Aufnahmeführung im Sperrteil 15.2 ein (wobei nur das Sperrteil bewegt wird) und löst dabei den Formschluss zwischen dem Sperrmittel 15 und dem Ladekabelstecker 22, auf. Ein Notfall tritt dann ein, wenn z. B. die Verriegelungsvorrichtung 10 nicht mit elektrischer Energie versorgt werden kann oder ein Steuerungsfehler vorliegt, oder ein Defekt in der Verriegelungsvorrichtung 10 vorhanden ist, so dass eine ordnungsgemäße Funktion der Verriegelungsvorrichtung 10 nicht mehr gegeben ist.

In der Figur 6 ist das Getriebe 14 gut als Schneckengetriebe 14 erkennbar. Dabei sitzt die Schnecke 14.1 drehfest auf einer Antriebswelle 13.1 des elektromechanischen Antriebs 13, der insbesondere als Elektromotor ausgestaltet ist. Die Drehbewegung der Schnecke 14.1 wird über die vorhandene Verzahnung auf das Schneckenrad 14.2 übertragen, wodurch das Schneckenrad 14.2 gedreht wird und das Sperrmittel 15 längs verschoben wird. Oberhalb des eigentlichen Schneckenrades 14.2 ist ein Steuermittel 14.3, in Form einer Steuerkurve 14.3, angeordnet, wodurch sich der Antrieb 13 exakt steuern lässt. Außerdem lassen sich aus den Signalen des ersten und zweiten Signalgebers 18, 19 auch die exakten Stellungen des Sperrmittels 15, insbesondere vom Führungsteil 15.1 und Sperrteil 15.2, erfassen. Der zweite Signalgeber 19 tastet über ein Schaltblech 19.1 die Steuerkurve 14.3 ab, wobei das Schaltblech 19.1 eine federnde Wirkung auf den zweiten Signalgeber 19 ausüben kann.

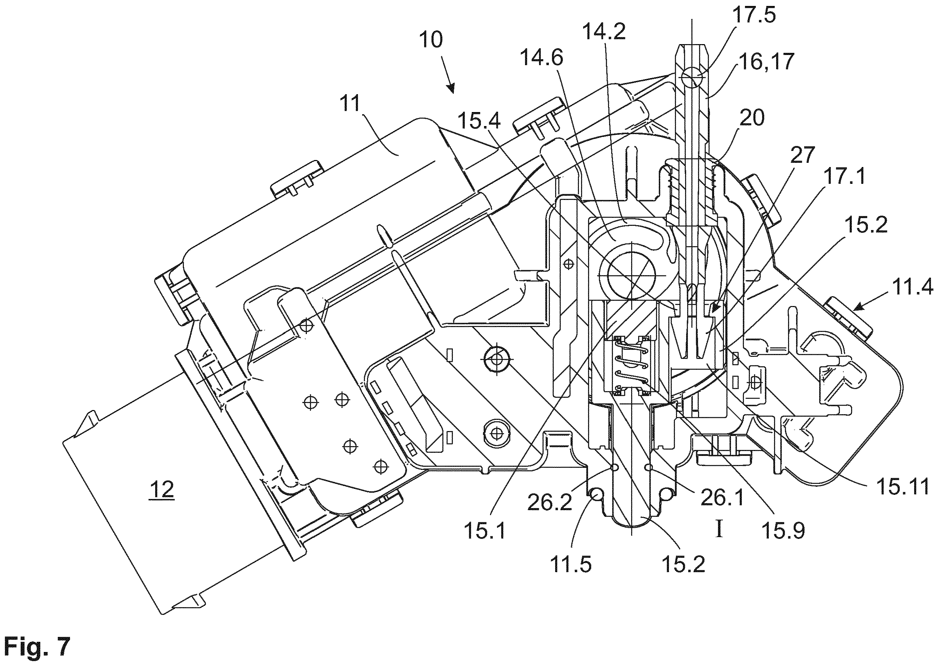

In Figur 6 ist vergleichbar zu Figur 3 die entsprechende Verriegelungsvorrichtung 10 in der Entriegelungsstellung I des Sperrmittels 15, insbesondere des Sperrteils 15.2, dargestellt. Hierbei ist gut der seitliche Freiraum 15.11 für das erste Ende 17.1 des Zugmittels 17 zu erkennen. Dabei ist über dem ersten Ende 17.1 des Zugmittels 17 ein Spiel zum Sperrteil 15.2 vorgesehen, so dass sich auch dieses Sperrmittel 15 frei zwischen seiner Verriegelungsstellung II und seiner Entriegelungsstellung I hin- und herbewegen kann, ohne im Normalfall das Zugmittel 17 zu verschieben. Die spiralförmige Führungsbahn 14.6, die seitlich im Schneckenrad 14.2 angeordnet ist, ist in der Figur 6 angedeutet und in Figur 7 gut erkennbar.

In der Figur 1 ist das Sperrmittel 15, insbesondere das Sperrteil 15.2 in seiner Verriegelungsstellung II dargestellt.

In der Figur 5 ist eine Schnittansicht der erfindungsgemäßen Verriegelungsvorrichtung 10 dargestellt. Hierbei ist auch die Ladebuchse 21 mit ihren elektrischen Kontakten 21.1 ersichtlich. Ebenfalls ist zu erkennen (s. Fig. 1), dass die Ladebuchse 21 einen Verpolungsschutz aufweist, der als abgeflachte Stelle in der sonst rund ausgestalteten Ladebuchse 21 ausgestaltet ist. Somit kann ein entsprechender Ladekabelstecker 22 nur in einer Position in die Ladebuchse 21 eingeführt werden. Ferner ist in der Figur 5 auch ein Überlastmittel als rein mechanisches Überlastmittel 25 dargestellt. Hierzu weist das Sperrmittel 15 an seinem Sperrteil 15.2, insbesondere der Spitze, eine Schräge/Fase oder Abrundung 15.12 auf, durch die es ermöglicht wird, dass der Ladekabelstecker 22 aus seiner aufgesteckten Position zur Ladekabelbuchse 21 zerstörungsfrei durch eine Gewalteinwirkung entfernbar ist bzw. die Klappe 28 zerstörungsfrei in die Öffnungsposition überführt werden kann. Zweckmäßigerweise weist die gegenüberliegende mechanische Kontaktfläche von dem Ladekabelstecker 22 bzw. der Klappe 28 ein geometrischkomplementär ausgestalteten Bereich zur Schräge/Fase/Abrundung 15.12 der Spitze vom Sperrteil 15.2 auf, um ein sauberes mechanisches Zusammenwirken zu ermöglich und somit ein ungewolltes Verhaken zu verhindern. Durch das vorgesehene Federelement 15.9 (s. Figur 3), welches zwischen dem Führungsteil 15.1 und dem Sperrteil 15.2 vom Sperrmittel 15 angeordnet ist, lässt sich die Auslösekraft des mechanischen Überlastmittels 25 in Zusammenhang mit der geometrisch ausgebildeten Spitze vom Sperrteil 15 als Schräge/Fase und/oder Abrundung 15.12 exakt definieren. Hierzu braucht nur die Federkraft des Federelements entweder durch Vorspannung oder durch die Federkonstante des Federelements selbst vordefiniert werden.

In der Figur 7 ist eine weitere Variante der erfindungsgemäßen Verriegelungsvorrichtung 10 dargestellt. Hierbei ist gut zu erkennen, wie die beiden Gehäusehälften 11.1 über diverse Rastverbindungen 11.4 miteinander formschlüssig verbunden werden. Zweckmäßigerweise ist das Gehäuse 11 ein Kunststoffspritzgussteil. Ferner wird das Gehäuse 11 der Verriegelungsvorrichtung 10 über z. B. eine oder mehrere Schrauben 26 mit der Ladebuchse 21 form- und/oder auch kraftschlüssig verbunden. Damit die Verriegelungsvorrichtung 10 austauschbar ist, kann ein Werkzeugschlüsselansatz am Schraubenkopf 26.1 vorgesehen sein. Über das Schraubengewinde 26.2 wird die Verriegelungsvorrichtung 10 an der Ladebuchse 21 sicher befestigt. Um die Montage der Verriegelungsvorrichtung 10 zu vereinfachen, kann das Zugmittel 17 zwei- oder mehrteilig ausgestaltet sein, wobei das erste Ende 17.1 unlösbar aber beweglich mit der Verriegelungsvorrichtung 10 verbunden ist. An diesem ersten Zugmittelende 17.1 kann eine Öse 17.5 in Form einer Bohrung vorgesehen sein, in die dann ein Bowdenzug, eine Stange, Kette oder dergleichen befestigt werden kann, um das gesamte Zugmittel 17 mit dem Betätigungselement 23 zu verbinden. Die zuvor erwähnte Öse 17.5 ist in der Figur 7 besser dargestellt.

In der Figur 7 ist die erfindungsgemäße Verriegelungsvorrichtung 10 mit einer Spitze des ersten Endes 17.1 vom Zugmittel 17 dargestellt. Dieses Ende 17.1 ist pfeilförmig ausgestaltet und bildet mit einem Vorsprung im Durchbruch 15.4 vom Sperrteil 15.2 einen Formschluss. Die Verbindung zwischen dem Zugmittel 17 und dem Sperrmittel 15, insbesondere dem Sperrteil 15.2, ist in diesem Fall als Rastmittel 27 ausgestaltet. In der Figur 7 befindet sich das Sperrmittel 15 in seiner Entriegelungsstellung I, die durch eine Notentriegelung erzielt worden ist. In diesem Fall wirkt der kragenförmige Rand der pfeilförmigen Spitze des ersten Endes 17.1 vom Zugmittel 17 formschlüssig mit dem kreisförmigen Vorsprung im Durchbruch 15.4 zusammen. Somit ist die Notentriegelung 16 in der Lage durch das Zugmittel 17 das Sperrmittel 15, insbesondere das Sperrteil 15.2, aus seiner Verriegelungsstellung II in die Entriegelungsstellung I zu überführen. Wie sich aus Figur 7 weiter ergibt, ist auch die Montage des ersten Endes 17.1 des Zugmittels 17 denkbar einfach, da dieses nur durch einen leichten Druck in den Durchbruch 15.4 eingeführt werden muss, bis das Rastmittel 27 formschlüssig verrastet ist. Zu diesem Zweck kann das gesamte Zugmittel 17 durch eine lineare Bewegung montiert werden. Um eine Bewegung des Sperrmittels 15 im Normalfall zu erreichen ist ein Freiraum 15.11 im Sperrteil 15.2 vorgesehen, in den die pfeilförmige Spitze vom ersten Ende 17.1 des Zugmittels 17 eintauchen kann ohne selbst eine Bewegung zu vollziehen. Um die federnde Eigenschaft der pfeilförmigen Spitze vom ersten Ende 17.1 des Zugmittels 17 zu verbessern, kann in der Spitze ein Längsschnitt vorgesehen sein.

In der Figur 5 ist ein Längsschnitt C-C durch die erfindungsgemäße Verrigelungsvorrichtung 10 dargestellt, wobei der Ladekabelsteckers 22 in die Ladebuchse 21 eingeführt und verriegelt worden ist. Aus diesem Grund befindet sich das Sperrmittel 15 in der Verriegelungsstellung II. Hierbei bildet das Sperrmittel 15 mit seiner Spitze des Sperrteils 15.2 einen Formschluss mit einer Ausnehmung 22.1 vom Ladekabelstecker 22. Beispielsweise kann an der Spitze des Sperrteils 15.2 eine Schräge 15.12, Rundung 15.12, bzw. Farse 15.12 als mechanisches Überlastmittel 25 vorgesehen sein. Durch diese Fase 15.12 ist es denkbar, den Ladekabelstecker 22 mit größerer Gewalt aus der Ladebuchse 21 herauszureißen ohne einen Schaden anzurichten. Selbstverständlich ist die zuvor erwähnte Schräge 15.12 bzw. Fase 15.12 nur optional denkbar.

In der Figur 2 ist der Schnitt B-B durch die erfindungsgemäße Verriegelungsvorrichtung 10 aus Figur 1 dargestellt. Hierbei befindet sich der Ladekabelstecker 22 in seiner Ladekabelbuchse 21 und die mechanische Verbindung ist durch das Sperrmittel 15, insbesondere das Sperrteil 15.2, verriegelt. Folglich ist der Ladekabelstecker 22 formschlüssig in der Ladekabelbuchse 21 durch die Verriegelungsvorrichtung 10 gesichert. Zusätzlich ist an der Ladekabelbuchse 21 ein Entwässerungskanal 21.3 angeordnet, falls Feuchtigkeit oder größere Flüssigkeitsmengen in die Ladekabelbuchse 21 eindringen sollten. Diese können dann über den Entwässerungskanal 21.3 aus der Ladekabelbuchse 21 abgeleitet werden. Die Ladekabelbuchse 21 weist selbst einen abgeflachten Verpolungsschutz auf, der an der Oberseite angeordnet ist.

In der Figur 3 ist der Schnitt A-A durch die Verriegelungsvorrichtung aus Figur 1 dargestellt, der vergleichbar zum Schnitt B-B ist, jedoch befindet sich hierbei das Sperrmittel 15 in seiner Entriegelungsstellung I. Wie gut zu erkennen ist, ist das Sperrmittel 15 zweiteilig aufgebaut, wobei zwischen dem Führungsteil 15.1 und dem Sperrteil 15.2 das Federmittel 15.9 angeordnet ist. Durch das Federmittel 15.9 kann auch die Auslösekraft des Überlastmittels 25 (s. hierzu Figur 5) bestimmt werden. In der Figur 3 sind zwei Positionen für das Überlastmittel 26 dargestellt, an deren Stelle entsprechende Kraftsensoren angeordnet sein können.

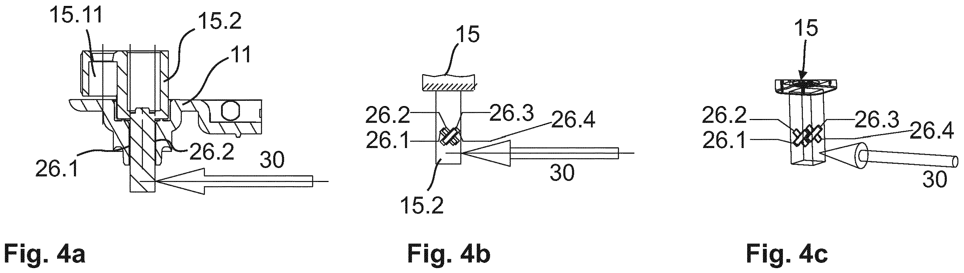

In den Figuren 4a bis 4c sind mögliche Anordnungen für die Sensoren 26.1-4 bei einem elektrischen Überlastmittel 26 beispielhaft dargestellt. Dabei kann in Figur 4a ein Sensor 26.1 zwischen dem Sperrmittel 15, insbesondere dem Sperrteil 15.2, und dem Führungsabschnitt angeordnet sein. Vorzugsweise wird dieser Sensor 26.1 auf der gegenüberliegenden Seite des Sperrmittels 15 angeordnet, an dem die Zugkraft 30, die durch die Gewalteinwirkung auf das Ladekabel 27 wirkt, angeordnet ist. Zusätzlich kann auf der gleichen Seite, an dem die Zugkraft 30 am Sperrmittel 15 angreift, ebenfalls ein zweiter Sensor 26.2 des Überlastmittels 26 angeordnet sein. Durch die wirkende Zugkraft 30 auf das Sperrmittel 15.2 vom Sperrmittel 15 kann sehr genau die wirkende Gewalt, und zwar in Beschleunigung, Geschwindigkeit und Höhe, bestimmt werden. Die entsprechenden Kräfte können von den Sensoren des Überlastmittels 26 durch Dehnungsmeßstreifen oder sonstige Kraftsensoren erfasst werden.

In der Figur 4b kommen jeweils zwei Kraftsensoren 26.1-2 bzw. 26.3-4 auf jeder Seite des Sperrteils 15.2 vom Sperrmittel 15 zum Einsatz, so dass durch eine Messung von Kräften über Biegung und Scherung des Sperrmittels 15, insbesondere vom Sperrteil 15.2, exakt die Gewalteinwirkung bestimmt werden kann. Hierbei kann eine Wheatstonesche-Brücke zur messtechnischen Auswertung der vier Sensoren 26.1 bis 4 Verwendung finden. Ein ähnliches Ausführungsbeispiel ist in der Figur 4c dargestellt, jedoch weist hierbei das Sperrteil 15.2 vom Sperrmittel 15 keinen kreisförmigen Querschnitt, sondern einen rechteckigen, insbesondere quadratischen, Querschnitt auf. Auch hierbei können insgesamt vier Sensoren angeordnet sein, die ausschließlich eine Verformung des Sperrteils 15.2 messtechnisch erfassen können. Wie gut zu erkennen ist, wirkt die Kraft 30 orthogonal zu der Messrichtung der Sensoren 26.1 bis 4, da diese durch die Verformung des Sperrteils 15.2 belastet werden. Durch die Kraft 30 in Figur 4c werden jedoch nicht die Sensoren 26.1 bis 4 zwischen dem Sperrmittel 15 und einem Führungsabschnitt für das Sperrmittel 15 eingeklemmt.

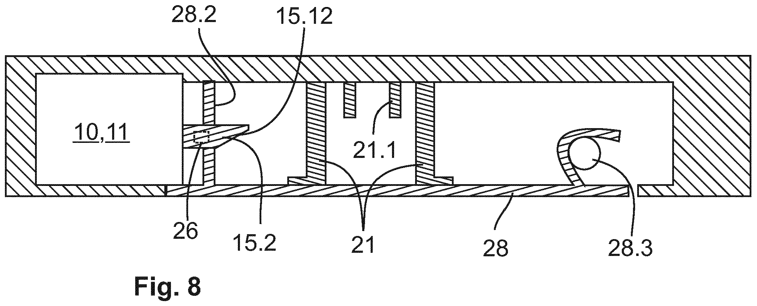

In der Figur 8 ist eine schematische Schnittansicht der erfindungsgemäßen Verriegelungsvorrichtung 10 dargestellt, die beispielsweise an einem Fahrzeug oder einer Ladestation zum Einsatz kommt. Dabei verriegelt das Sperrmittel 15 mit dem aus dem Gehäuse 11 herausragenden Sperrteil 15.2 eine Klappe 28, die in einer Schließposition dargestellt ist. In dieser Schließposition verdeckt die Klappe 28 die Ladekabelbuchse 21, die dazu dient, mit dem Ladekabelstecker 22 verbunden zu werden, um z. B. das Fahrzeug von außen mit elektrischer Energie zu versorgen. Die Klappe 28 ist dreh- bzw. schwenkbar um ihre Drehachse 28.3 angeordnet, wodurch sie zwischen ihrer Öffnungsposition und Schließposition hin und her bewegbar ist. Ferner weist die Klappe 28 an ihrer Innenseite einen herausragenden Schenkel 28.2 auf, an dem eine Öffnung 28.1 vorgesehen ist. Diese Öffnung 28.1 ist dafür vorgesehen, dass sie auch mit dem Sperrmittel 15, insbesondere dem Sperrteil 15.2 der erfindungsgemäßem Verriegelungsvorrichtung 10 in der Schließposition der Klappe 28 form- und/oder kraftschlüssig zusammenwirkt. Somit ist es durch die Klappe 28 möglich, die Ladekabelbuchse 21 vor Verschmutzungen und Feuchtigkeiten zu schützen, indem die Klappe 28 in die Schließposition gebracht wird, wenn eben kein Ladekabelstecker 22 an der Ladekabelbuchse 21 aufgesteckt ist.

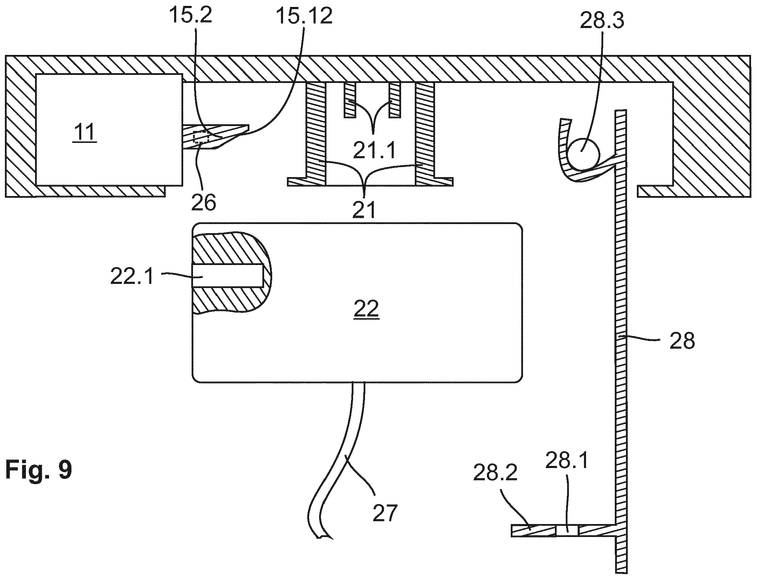

In der weiteren Figur 9 ist eine vergleichbare Schnittdarstellung zu Figur 8 dargestellt, wobei jedoch die Klappe 28 in ihrer Öffnungsposition um die Drehachse 28.3 gedreht worden ist. In dieser Öffnungsposition ist auch gut der an der Innenseite herausragende Schenkel 28.2 mit der Öffnung 28.1 ersichtlich. In dieser Öffnungsposition ist der Ladekabelstecker 22 auf die Ladekabelbuchse 21 aufsteckbar. Hierbei kann an dem Sperrmittel 15, der erfindungsgemäßen Vorrichtung 10, eine Schräge 15.12 angeordnet sein, die dazu dient, dass der Ladekabelstecker 22 auch in der Verriegelungsstellung II auf die Ladekabelbuchse 21 aufsteckbar ist. Dabei dient die Schräge 15.12 dazu, dass das federbelastete 15.9 Sperrteil 15.2 in das Gehäuse 11 der Verriegelungsvorrichtung 10 hineingedrückt wird, wenn der Ladekabelstecker 22 auf die Ladekabelbuchse 21 aufgesteckt wird. Anschließend fährt das Sperrteil 15.2 durch die Ausdrückkraft des Federelements 15.9 in die dafür vorgesehene Ausnehmung 22.1 vom Ladekabelstecker 22, um diesen formschlüssig zu verriegeln. Sofern die Schräge 15.12 vom Sperrteil 15.2 des Sperrmittels 15 auch an der oberen Seite (aus Sicht der Figuren 8 bis 10) vorgesehen ist, kann diese obere Schräge 15.12 (nicht dargestellt in den Fig. 8 bis10) auch als mechanisches Überlastmittel 25 dienen.

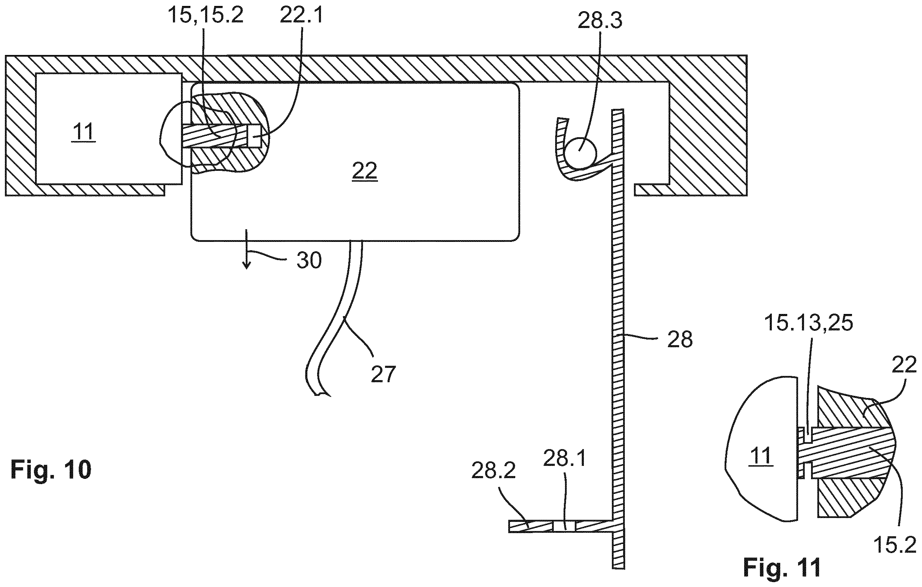

In der weiteren Figur 10 ist nunmehr der Ladekabelstecker 22 auf die entsprechende Ladekabelbuchse 21 aufgesteckt und durch das Sperrmittel 15, welches sich in der Verriegelungsstellung II befindet, sicher verriegelt. Diese Verbindung zwischen dem Ladekabelstecker 22 und der erfindungsgemäßen Vorrichtung 10 lässt sich nur durch die Entriegelungsstellung I des Sperrmittels 15 auflösen. Erfindungsgemäß ist nur bei einer Gewalteinwirkung auf den Stecker 22 in Richtung des Pfeils 30 vorgesehen, dass durch die Überlastmittel 25 oder 26 ein Entriegeln des Steckers 22 möglich ist. Ansonsten finden die Ver- und Entriegelung des Ladekabelsteckers 22 wie gewünscht, d. h im Normalbetrieb statt. In der Figur 10 ist die Spitze des Sperrteils 15.2, anders als in den Figuren 8 und 9, rechteckig ausgestaltet, so dass eine Rundung oder Fase 15.12 fehlt. Folglich muss das Sperrmittel 15 in diesem Fall immer von seinem Antrieb 13 verschoben werden, da ansonsten ein Aufstecken des Steckers 22 in der Verriegelunsgstellung II des Sperrmittels 15 nicht möglich ist. Vorher muss folglich das Sperrmittel 15 aus Figur 10 in die Entriegelungsstellung I überführt werden.

In der Figur 11 ist eine vergrößerte schematische Schnittdarstellung aus der Figur 10 dargestellt, in der das Sperrmittel 15 den Ladekabelstecker 22 verriegelt. Zusätzlich ist in der Figur 11 das mechanische Überlastmittel 25 in Form einer Sollbruchstelle 15.13 dargestellt. Diese Sollbruchstelle 15.13 ist als eine Verjüngung am Sperrmittel 15, insbesondere am Sperrteil 15.2 vorgesehen und liegt zweckmäßigerweise in der Verriegelungsstellung II des Sperrmittels 15 zwischen dem Gehäuse 11 und dem Ladekabelstecker 22. Bei einer Gewalteinwirkung auf den Ladekabelstecker 22 in Richtung des Pfeils 30 sorgt dieses mechanische Überlastmittel 25 in Form der Sollbruchstelle 15.13 für ein Abscheren des Sperrteils 15.2, so dass der Ladekabelstecker 22 von der Ladekabelbuchse 21 entfernbar ist.

### Bezugszeichenliste

- 10: Verriegelungsvorrichtung
- 11: Gehäuse
- 11.1: untere Gehäusehälfte
- 11.2: obere Gehäusehälfte
- 11.3: Halte-, Führungs- und/oder Aufnahmeelement
- 11.4: Rastverbindung
- 11.5: Ring

- 12: Anschlußbuchse
- 12.1: elektrische Kontakte
- 13: Antrieb
- 13.1: Antriebswelle
- 14: Getriebe
- 14.1: Schnecke
- 14.2: Schneckenrad
- 14.3: Führungsbahn in 14.2 für 15
- 15: Sperrmittel
- 15.1: Führungsteil
- 15.2: Sperrteil
- 15.3: Ausnehmung für 1. Ende
- 15.4: Durchbruch für 17
- 15.5: Steuermittel für 1. Sensor
- 15.6: Verbindungsteil, insbesondere Verbindungstift
- 15.7: Führungsvorsprung
- 15.8: Anschlag
- 15.9: Federelement
- 15.10: Langloch für 15.6
- 15.11: Langloch / Freiraum für 17.1
- 15.12: Schräge / Rundung / Fase an Spitze von 15.2
- 15.13: Sollbruchstelle
- 16: Notentriegelung
- 17: Zugmittel für 16
- 17.1: erstes Ende
- 17.2: zweites Ende
- 17.3: Kompensationselement; insbesondere Feder
- 17.4: flexibles Zugmittel; Seil, Bowdenzug
- 17.5: Öse
- 18: erster Signalgeber, Sensor
- 19: zweiter Signalgeber, Sensor
- 20: Dichtung für 17
- 21: Ladekabelbuchse
- 21.1: elektrischer Kontakt
- 21.2: Verpolungsschutz
- 21.3: Entwässungsrinne
- 22: Ladekabelstecker
- 22.1: Ausnehmung für 15
- 23: Betätigungselement
- 24: Kommunikationsmittel für Daten
- 25: Überlastmittel mechanisch, BZ 15.12
- 26: Überlastmittel elektrisch
- 26.1: Sensor 1
- 26.2: Sensor 2
- 26.3: Sensor 3
- 26.4: Sensor 4
- 27: Ladekabel
- 28: Klappe
- 28.1: Öffnung für 15, 15.2
- 28.2: herausragender Schenkel an 28
- 28.3: Drehachse für 28

- 30: Pfeil für Kraft aus Gewalteinwirkung

## Patentansprüche

1. Verriegelungsvorrichtung (10) zur Ver- und Entriegelung einer Klappe und/oder eines Ladekabelsteckers (22) von einem Ladekabel, insbesondere für ein Fahrzeug, an einer Ladekabelbuchse mit
zumindest einem beweglichen Sperrmittel (15), insbesondere in Form eines Sperrbolzens, das zur mechanischen Verriegelung der Klappe und/oder des Ladekabelsteckers (22) mit der Ladekabelbuchse dient, wobei das Sperrmittel (15) zumindest eine Verriegelungsstellung (II), in welcher der Klappe und/oder der Ladekabelstecker (22) durch das Sperrmittel (15) verriegelbar ist, und eine Entriegelungsstellung (I), in welcher die Klappe und/oder der Ladekabelstecker (22) durch das Sperrmittel (15) freigebbar ist, aufweist und
einem elektromechanischen Antrieb (13), der das Sperrmittel (15) antreibt, wodurch ein Wechsel zwischen der Verriegelungsstellung (II) und der Entriegelungsstellung (I) erzeugbar ist,
**dadurch gekennzeichnet,**
**dass** zumindest ein Überlastmittel (25, 26) zwischen der Klappe und/oder dem Ladekabelstecker (22) und der Ladekabelbuchse (21) vorgesehen ist, wodurch der Ladekabelstecker (22) von der Ladekabelbuchse (21) in der Verriegelungsstellung (II) bei Gewalteinwirkung trennbar ist bzw. die Klappe in ihre Öffnungsposition überführbar ist.

2. Verriegelungsvorrichtung (10) nach Anspruch 1,
**dadurch gekennzeichnet,**
**dass** das Überlastmittel (25, 26) das Sperrmittel (15) aus seiner Verriegelungsstellung (II) in seine Entriegelungsstellung (I) überführt, wodurch der Ladekabelstecker (22) aus der Ladekabelbuchse (21) entfernbar ist bzw. die Klappe in ihre Öffnungsposition überführbar ist
und/oder dass das Überlastmittel (25, 26) in der Verriegelungsstellung (II) zur zerstörungsfreien Öffnung der Klappe und/oder Trennung des Ladekabelsteckers (22) von der Ladekabelbuchse (21) dient
und/oder dass das Überlastmittel (25) das Sperrmittel (15) rein mechanisch aus seiner Verriegelungsstellung (II) in seine Entriegelungsstellung (I) überführt.

3. Verriegelungsvorrichtung (10) nach einem der vorhergehenden Ansprüche,
**dadurch gekennzeichnet,**
**dass** das Überlastmittel (26) zumindest einen Sensor (26.1) aufweist, der die Gewalteinwirkung messtechnisch erfasst und ein entsprechendes Überlastsignal erzeugt, wobei insbesondere der Sensor Kräfte misst, die durch die Gewalteinwirkung entstehen und/oder dass das Überlastmittel (26) bei Gewalteinwirkung den elektromechanischen Antrieb (13) des Sperrmittels (15) insbesondere durch ein Überlastsignal ansteuert, wodurch das Sperrmittel (15) mit Hilfe des elektromechanischen Antriebs (13) aus seiner Verriegelungsstellung (II) in seine Entriegelungsstellung (I) insbesondere bei einer vorbestimmten Auslösekraft überführbar ist
und/oder dass durch das Überlastsignal ein elektrischer Ladestromfluß, insbesondere im Ladekabel und/oder in der Verriegelungsvorrichtung (10) unterbrechbar ist.

4. Verriegelungsvorrichtung (10) nach einem der vorhergehenden Ansprüche,
**dadurch gekennzeichnet,**
eine Auslösekraft für bzw. durch das Überlastmittel (25, 26) einstellbar ist.

5. Verriegelungsvorrichtung (10) nach einem der vorhergehenden Ansprüche,
**dadurch gekennzeichnet,**
**dass** zumindest ein Sensor (26.1) des Überlastmittels (26) als Dehnungsmeßstreifen (DMS), piezoelektrischer, induktiver, magnetoelastischer, hydraulischer oder mechanischer Kraftaufnehmer oder als optischer Sensor ausgestaltet ist oder der Sensor als Abstandssensor, Widerstandssensor, Kraftsensor oder als Kontaktsensor ausgebildet ist
und/oder dass zumindest ein Sensor (26.1) des Überlastmittels (26) zwischen dem Sperrmittel (15) und einem Führungsabschnitt (11.6) für das Sperrmittel (15) angeordnet ist,
wobei der Führungsabschnitt (11.6) zumindest einen Teil eines Gehäuses (11) der Verriegelungsvorrichtung (10) bildet
und/oder dass zumindest ein Sensor (26.1) des Überlastmittels (26) am Sperrmittel (15) angeordnet ist
und/oder dass zumindest ein Sensor (26.1) des Überlastmittels (26) am Führungsabschnitt (11.6) für das Sperrmittel (15) angeordnet ist.

6. Verriegelungsvorrichtung (10) nach einem der vorhergehenden Ansprüche,
**dadurch gekennzeichnet,**
**dass** zumindest zwei Sensoren (26.1, 26.2) des Überlastmittels (26) zwischen dem Sperrmittel (15) und einem Führungsabschnitt (11.6) für das Sperrmittel (15) angeordnet ist, und
wobei insbesondere die beiden Sensoren (26.1, 26.2) eine unterschiedliche, insbesondere senkrechte Messrichtung aufweisen und/oder
wobei insbesondere die beiden Sensoren (26.1, 26.2) auf gegenüberliegenden Seiten vom Sperrmittel (15) angeordnet sind.

7. Verriegelungsvorrichtung (10) nach einem der vorhergehenden Ansprüche,
**dadurch gekennzeichnet,**
**dass** zumindest ein Sensor (26.1) des Überlastmittels (26) zwischen der Klappe und/oder dem Ladekabelstecker (22) sowie der Ladekabelbuchse (21) angeordnet ist,
wobei insbesondere der Sensor als Abstandssensor, Widerstandssensor, Kraftsensor oder als Kontaktsensor ausgestaltet ist.

8. Verriegelungsvorrichtung (10) nach einem der vorhergehenden Ansprüche,
**dadurch gekennzeichnet,**
**dass** zumindest ein Sensor die Stellung des Sperrmittels (15) und/oder zumindest ein Sensor die Position der Klappe und/oder des Ladekabelsteckers (22) in der Ladekabelbuchse messtechnisch erfasst.

9. Verfahren zur Ver- und Entriegelung einer Klappe und/oder eines Ladekabelsteckers (22) von einem Ladekabel (27), insbesondere für ein Fahrzeug, an einer Ladekabelbuchse mit zumindest einem beweglichen Sperrmittel (15), insbesondere in Form eines Sperrbolzens, das zur mechanischen Verriegelung der Klappe und/oder des Ladekabelsteckers (22) mit der Ladekabelbuchse dient, wobei das Sperrmittel (15) zumindest eine Verriegelungsstellung (II), in welcher die Klappe und/oder der Ladekabelstecker (22) durch das Sperrmittel (15) verriegelbar ist, und eine Entriegelungsstellung (I), in welcher die Klappe und/oder der Ladekabelstecker (22) durch das Sperrmittel (15) freigebbar ist, aufweist und
einem elektromechanischen Antrieb (13), der das Sperrmittel (15) antreibt, wodurch ein Wechsel zwischen der Verriegelungsstellung (II) und Entriegelungsstellung (I) erzeugbar ist,
**dadurch gekennzeichnet,**
**dass** bei einer Gewalteinwirkung auf die mechanische Verbindung zwischen der Klappe und/oder dem Ladekabelstecker (22) sowie der Ladekabelbuchse (21) in der Verriegelungsstellung (II), die mechanische Verbindung, insbesondere durch ein Überlastmittel (25, 26), gelöst wird, wodurch der Ladekabelstecker (22) von der Ladekabelbuchse (21) getrennt wird bzw. die Klappe in ihre Öffnungsposition überführt wird.

10. Verfahren nach Anspruch 9,
**dadurch gekennzeichnet,**
**dass** bei einer Verriegelungsvorrichtung (10) nach einem der Ansprüche 1 bis 15 anwendbar ist.

11. Verfahren nach Anspruch 9 oder 10,
**dadurch gekennzeichnet,**
**dass** im Fall der Gewalteinwirkung rein mechanisch, insbesondere durch das Überlastmittel (25), das Sperrmittel (15) aus seiner Verriegelungsstellung (II) in seine Entriegelungsstellung (I) überführt wird.

12. Verfahren nach Anspruch 9 oder 10,
**dadurch gekennzeichnet,**
**dass** das Überlastmittel (26), insbesondere durch einen Sensor, meßtechnisch die Gewalteinwirkung erfasst und den elektromechanischen Antrieb (13) des Sperrmittels (15) derart ansteuert, dass das Sperrmittel (15) aus seiner Verriegelungsstellung (II) in seine Entriegelungsstellung (I) überführt wird.

13. Verfahren nach einem Anspruch 9 bis 12,
**dadurch gekennzeichnet,**
**dass** im Fall der Gewalteinwirkung die mechanische Verbindung, insbesondere durch das Sperrmittel (15), zwischen der Klappe und/oder dem Ladekabelstecker (22) sowie der Ladekabelbuchse (21) in der Verriegelungsstellung (II) zerstörungsfrei gelöst wird.

14. Verfahren nach einem Anspruch 9 bis 13,
**dadurch gekennzeichnet,**
**dass** im Fall der Gewalteinwirkung der elektrische Ladestromfluß, insbesondere im Ladekabel (27) und/oder in der Verriegelungsvorrichtung (10) unterbrochen wird und/oder dass ein Alarmsignal für die Unterbrechnung erzeugt wird.

15. Verfahren nach einem Anspruch 9 bis 14,
**dadurch gekennzeichnet,**
**dass** eine Auslösekraft, insbesondere für bzw. durch das Überlastmittel (25), eingestellt wird, bei deren Erreichen die mechanische Verbindung zwischen dem Ladekabelstecker (22) und der Ladekabelbuchse (21) getrennt wird.

## Claims

1. A locking device (10) for locking and unlocking a panel and/or a charging cable plug (22) of a charging cable, particularly for a vehicle, to a charging cable socket, having
at least one moving locking means (15), particularly in the form of a locking bolt which serves the purpose of mechanically locking the panel and/or the charging cable plug (22), the same having the charging cable socket, wherein the locking means (15) has at least one locking position (II) in which the panel and/or the charging cable plug (22) can be locked by the locking means (15), and one unlocked position (I) in which the panel and/or the charging cable plug (22) can be released by the locking means (15), and
an electromechanical drive (13) which drives the locking means (15), such that it is possible to switch between the locking position (II) and the unlocked position (I),
**characterized in that**
at least one overload means (25, 26) is configured between the panel and/or the charging cable plug (22) and the charging cable socket (21), by means of which the charging cable plug (22) can be separated from the charging cable socket (21) when in the locked position (II) when undue force is applied, and/or by means of which the panel can be switched to its open position.

2. A locking device (10) according to claim 1,
**characterized in that**
the overload means (25, 26) switches the locking means (15) from its locking position (II) to its unlocked position (I), thereby enabling the charging cable plug (22) to be removed from the charging cable socket (21) and/or the panel to be switched into its open position, and/or that the overload means (25, 26), when in the locking position (II) serves the purpose of non-destructively opening the panel and/or separating the charging cable plug (22) from the charging cable socket (21), and/or that the overload means (25) switches the locking means (15) in a purely mechanical manner from its locking position (II) to its unlocked position (I).

3. A locking device (10) according to one of the previous claims,
**characterized in that**
the overload means (26) has at least one sensor (26.1) which measures the application of undue force and generates a corresponding overload signal, wherein the sensor particularly measures forces which result from the application of undue force, and/or that the overload means (26) controls, particularly by means of an overload signal, the electromechanical drive (13) of the locking means (15) when undue force is applied, whereby it is possible to switch the locking means (15) from its locking position (II) to its unlocked position (I) by means of the electromechanical drive (13), particularly upon a predetermined trigger force, and/or that an electrical charging current, particularly in the charging cable and/or in the locking device (10), can be cut by the overload signal.

4. A locking device (10) according to one of the previous claims
**characterized in that**
a trigger force can be adjusted for and/or by the overload means (25, 26).

5. A locking device (10) according to one of the previous claims,
**characterized in that**
at least one sensor (26.1) of the overload means (26) is designed as a strain gauge, a piezoelectric, inductive, magnetoelastic, hydraulic, or mechanical force transducer, or as an optical sensor, or the sensor is designed as a distance sensor, resistance sensor, force sensor, or contact sensor, and/or that at least one sensor (26.1) of the overload means (26) is arranged between the locking means (15) and a guide segment (11.6) for the locking means (15), wherein the guide segment (11.6) forms at least a part of a housing (11) of the locking device (10) and/or that at least one sensor (26.1) of the overload means (26) is arranged on the locking means (15) and/or at least one sensor (26.1) of the overload means (26) is arranged on the guide segment (11.6) for the locking means (15)..

6. A locking device (10) according to one of the previous claims,
**characterized in that**
at least two sensors (26.1, 26.2) of the overload means (26) is arranged between the locking means (15) and a guide segment (11.6) for the locking means (15), and
wherein the two sensors (26.1, 26.2) have a different direction of measurement, particularly perpendicular to that of the other, and/or
wherein the two sensors (26.1, 26.2) are particularly arranged on opposite sides of the locking means (15).

7. A locking device (10) according to one of the previous claims,
**characterized in that**
at least one sensor (26.1) of the overload means (26) is arranged between the panel and/or the charging cable plug (22) and the charging cable socket (21),
wherein the sensor is particularly designed as a distance sensor, resistance sensor, force sensor, or contact sensor.

8. A locking device (10) according to one of the previous claims,
**characterized in that**
at least one sensor measures the position of the locking means (15) and/or at least one sensor measures the position of the panel and/or of the charging cable plug (22) in the charging cable socket.

9. A method for locking a panel and/or a charging cable plug (22) of a charging cable (27), particularly for a vehicle, to, and unlocking the same from, a charging cable socket having at least one moving locking means (15), particularly in the form of a locking bolt which serves the purpose of mechanically locking the panel and/or the charging cable plug (22) to the charging cable socket, wherein the locking means (15) has at least one locking position (II) in which the panel and/or the charging cable plug (22) can be locked by the locking means (15), and one unlocked position (I) in which the panel and/or the charging cable plug (22) can the released by the locking means (15), and
an electromechanical drive (13) which drives the locking means (15), thereby making it possible to switch between the locking position (II) and the unlocked position (I),
**characterized in that**
when undue force is applied to the mechanical connection between the panel and/or the charging cable plug (22) and the charging cable socket (21) when in the locking position (II), the mechanical connection is released, particularly by an overload means (25, 26), whereby the charging cable plug (22) is separated from the charging cable socket (21) and/or the panel is switched to its open position.

10. A method according to claim 9,
**characterized in that**
can be used in a locking device (10) according to one of the claims 1 to 15.

11. A method according to claim 9 or 10,
**characterized in that**
in the event of an undue application of force, the locking means (15) is switched from its locking position (II) into its unlocked position (I), particularly by the overload means (25).

12. A method according to claim 9 or 10,
**characterized in that**
the overload means (26) measures the application of undue force, particularly by means of a sensor, and controls the electromechanical drive (13) of the locking means (15) in such a manner that the locking means (15) is switched from its locking position (II) to its unlocked position (I).

13. A method according to one of the claims 9 to 12,
**characterized in that**
in the event of the undue application of force, the mechanical connection between the panel and/or the charging cable plug (22) and the charging cable socket (21) in the locking position (II) is non-destructively released, particularly by means of the locking means (15).

14. A method according to one of the claims 9 to 13,
**characterized in that**
in the event of an undue application of force, the electrical charging current, particularly in the charging cable (27) and/or in the locking device (10) is cut, and/or **in that** an alarm signal for the cutting of said current is produced.

15. A method according to one of the claims 9 to 14,
**characterized in that**
a trigger force is set, particularly for and/or by the overload means (25), and when reached, the mechanical connection between the charging cable plug (22) and the charging cable socket (21) is separated.

## Revendications

1. Dispositif de verrouillage (10) pour le verrouillage et déverrouillage d'un clapet et/ou d'une fiche de câble de charge (22) d'un câble de charge, en particulier pour un véhicule, sur une prise de câble de charge comprenant
au moins un moyen de blocage (15) mobile, en particulier sous forme d'un boulon de blocage qui sert au verrouillage mécanique du clapet et/ou de la fiche de câble de charge (22) avec la prise de câble de charge, dans lequel le moyen de blocage (15) présente au moins une position de verrouillage (II) dans laquelle le clapet et/ou la fiche de câble de charge (22) peut être verrouillé (e) par le moyen de blocage (15) et une position de déverrouillage (I) dans laquelle le clapet et/ou la fiche de câble de charge (22) peut être libéré(e) par le moyen de blocage (15), et
un entraînement électromécanique (13) qui entraîne le moyen de blocage (15), ce par quoi un changement entre la position de verrouillage (II) et la position de déverrouillage (I) peut être produit,
**caractérisé en ce**
**qu'**au moins un moyen de surcharge (25, 26) est prévu entre le clapet et/ou la fiche de câble de charge (22) et la prise de câble de charge (21), ce par quoi la fiche de câble de charge (22) peut être séparée de la prise de câble de charge (21) dans la position de verrouillage (II) par action forcée, respectivement le clapet peut être amené dans sa position d'ouverture.

2. Dispositif de verrouillage (10) selon la revendication 1, **caractérisé en ce**
**que** le moyen de surcharge (25, 26) fait passer le moyen de blocage (15) de sa position de verrouillage (II) à sa position de déverrouillage (I), en conséquence de quoi la fiche de câble de charge (22) peut être enlevée de la prise de câble de charge (21), respectivement le clapet peut être amené dans sa position d'ouverture,
et/ou **en ce que** le moyen de surcharge (25, 26), dans la position de verrouillage (II), sert à l'ouverture sans destruction du clapet et/ou à la séparation de la fiche de câble de charge (22) de la prise de câble de charge (21),
et/ou **en ce que** le moyen de surcharge (25) fait passer le moyen de blocage (15) de sa position de verrouillage (II) à sa position de déverrouillage (I) de façon purement mécanique.

3. Dispositif de verrouillage (10) selon l'une des revendications précédentes, **caractérisé en ce**
**que** le moyen de surcharge (26) présente au moins un capteur (26.1) qui détecte de façon métrologique l'action forcée et produit un signal de surcharge correspondant, dans lequel en particulier, le capteur mesure des forces qui se produisent par l'action forcée et/ou **en ce que** le moyen de surcharge (26), en cas d'action forcée, commande l'entraînement électromécanique (13) du moyen de blocage (15), en particulier par un signal de surcharge, en conséquence de quoi le moyen de blocage (15), à l'aide de l'entraînement électromécanique (13), peut être amené de sa position de verrouillage (II) à sa position de déverrouillage (I), en particulier lors d'une force de déclenchement prédéfinie
et/ou **en ce que** par le signal de surcharge, un courant de charge électrique, en particulier dans le câble de charge et/ou dans le dispositif de verrouillage (10) peut être interrompu.

4. Dispositif de verrouillage (10) selon l'une des revendications précédentes, **caractérisé en ce**
**qu'**une force de déclenchement peut être réglée pour, respectivement par, le moyen de surcharge (25, 26).

5. Dispositif de verrouillage (10) selon l'une des revendications précédentes, **caractérisé en ce qu'**au moins un capteur (26.1) du moyen de surcharge (26) est réalisé en tant que jauge de contrainte (DMS), capteur de force piézoélectrique, inductif, magnéto-élastique, hydraulique ou mécanique ou en tant que capteur optique ou que le capteur est réalisé en tant que capteur de distance, capteur de résistance, capteur de force ou en tant que capteur de contact,
et/ou **en ce qu'**au moins un capteur (26.1) du moyen de surcharge (26) est disposé entre le moyen de blocage (15) et un tronçon de guidage (11.6) pour le moyen de blocage (15),
dans lequel le tronçon de guidage (11.6) forme au moins une partie d'un boîtier (11) du dispositif de verrouillage (10),
et/ou **en ce qu'**au moins un capteur (26.1) du moyen de surcharge (26) est disposé sur le moyen de blocage (15) et/ou **en ce qu'**au moins un capteur (26.1) du moyen de surcharge (26) est disposé sur le tronçon de guidage (11.6) pour le moyen de blocage (15).

6. Dispositif de verrouillage (10) selon l'une des revendications précédentes, **caractérisé en ce**
**qu'**au moins deux capteurs (26.1, 26.2) du moyen de surcharge (26) sont disposés entre le moyen de blocage (15) et un tronçon de guidage (11.6) pour le moyen de blocage (15), et
dans lequel en particulier les deux capteurs (26.1, 26.2) présentent un sens de mesure différent, en particulier vertical, et/ou
dans lequel en particulier, les deux capteurs (26.1, 26.2) sont disposés sur des côtés opposés du moyen de blocage (15).

7. Dispositif de verrouillage (10) selon l'une des revendications précédentes, **caractérisé en ce**
**qu'**au moins un capteur (26.1) du moyen de surcharge (26) est disposé entre le clapet et/ou la fiche de câble de charge (22) ainsi que la prise de câble de charge (21),
dans lequel en particulier, le capteur est réalisé en tant que capteur de distance, capteur de résistance, capteur de force ou en tant que capteur de contact.

8. Dispositif de verrouillage (10) selon l'une des revendications précédentes, **caractérisé en ce**
**qu'**au moins un capteur détecte de façon métrologique la position du moyen de blocage (15) et/ou au moins un capteur détecte la position du clapet et/ou de la fiche de câble de charge (22) dans la prise de câble de charge.

9. Procédé de verrouillage et déverrouillage d'un clapet et/ou d'une fiche de câble de charge (22) d'un câble de charge (27), en particulier pour un véhicule, sur une prise de câble de charge comprenant au moins un moyen de blocage (15) mobile, en particulier sous forme d'un boulon de blocage qui sert au verrouillage mécanique du clapet et/ou de la fiche de câble de charge (22) avec la prise de câble de charge, dans lequel le moyen de blocage (15) présente au moins une position de verrouillage (II) dans laquelle le clapet et/ou la fiche de câble de charge (22) peut être verrouillé(e) par le moyen de blocage (15) et une position de déverrouillage (I) dans laquelle le clapet et/ou la fiche de câble de charge (22) peut être libéré(e) par le moyen de blocage (15), et
un entraînement électromécanique (13) qui entraîne le moyen de blocage (15), en conséquence de quoi un changement entre la position de verrouillage (II) et la position de déverrouillage (I) peut être produit,
**caractérisé en ce**
**qu'**en cas d'action forcée sur la liaison mécanique entre le clapet et/ou la fiche de câble de charge (22) ainsi que la prise de câble de charge (21) dans la position de verrouillage (II), la liaison mécanique est séparée, en particulier par un moyen de surcharge (25, 26), en conséquence de quoi la fiche de câble de charge (22) est séparée de la prise de câble de charge (21), respectivement le clapet est amené dans sa position d'ouverture.

10. Procédé selon la revendication 9,
**caractérisé en ce**
**que** peut être appliqué sur un dispositif de verrouillage (10) selon l'une des revendications 1 à 15.

11. Procédé selon la revendication 9 ou 10, **caractérisé en ce**
**qu'**en cas d'action forcée de façon purement mécanique, en particulier par le moyen de surcharge (25), le moyen de blocage (15) peut être amené de sa position de verrouillage (II) à sa position de déverrouillage (I).

12. Procédé selon la revendication 9 ou 10, **caractérisé en ce**
**que** le moyen de surcharge (26), en particulier par un capteur, détecte de façon métrologique l'action forcée et commande l'entraînement électromécanique (13) du moyen de blocage (15) de telle sorte que le moyen de blocage (15) est amené de sa position de verrouillage (II) à sa position de déverrouillage (I).

13. **Procédé** selon une revendication 9 à 12, **caractérisé en ce**
**qu'**en cas d'action forcée, la liaison mécanique, en particulier par le moyen de blocage (15), est séparée sans destruction entre le clapet et/ou la fiche de câble de charge (22) ainsi que la prise de câble de charge (21) dans la position de verrouillage (II).

14. Procédé selon une revendication 9 à 13, **caractérisé en ce**
**qu'**en cas d'action forcée, le courant de charge électrique est interrompu en particulier dans le câble de charge (27) et/ou dans le dispositif de verrouillage (10) et/ou **en ce qu'**un signal d'alarme est produit pour l'interruption.

15. Procédé selon une revendication 9 à 14, **caractérisé en ce**
**qu'**une force de déclenchement est réglée, en particulier pour, respectivement par, le moyen de surcharge (25) et lorsqu'elle est atteinte, la liaison mécanique entre la fiche de câble de charge (22) et la prise de câble de charge (21) est séparée.
